# EUROPEAN PATENT APPLICATION

(11) **EP 2 532 606 A1**
(43) Date of publication of application: **12.12.2012**
(21) Application number: 11169024.4
(22) Date of filing: 07.06.2011
(51) Int. Cl.: B65D 81/34, B65D 75/58, B65D 79/00, B29C 65/00, B31B 19/84

(54) **Bag with a valve and a method of manufacturing such a bag**

(71) Applicant: Mondi AG, 1032 Wien (AT)
(72) Inventor: Caro, Christian, 78510 Triel / Siene (FR)
(74) Representative: Schneider, Michael

(57) **Abstract**

A bag (1) for microwave heating of food (2) comprises a wall (3) made from a foil (4) that comprises a sealable inside layer (7), and a closure-seal (8) that hermetically seals an inside (9) of the bag (1) from an outside (10) of the bag (1), wherein the closure seal (8) is created by sealing together areas of the inside layer (7), and a valve (11) located inside the bag (1) that separates a first part (13) of the bag (1), which encloses a volume (14) intended to carry the packaged good (2), from a second part (15) of the bag (1), wherein the valve (11) comprises a number of valve-seals (16) that seal together areas of the inside layer (7), and a number of valve-channels (17) that are located between sealed together areas of the inside layer (7).

## Description

### FIELD OF THE INVENTION

The invention relates to a bag comprising a valve.

The invention further relates to a method of manufacturing such a bag according to the first paragraph.

The invention further relates to a sealing jaw for use in the method according to the preceding paragraph.

The invention further relates to a packaged good that is packed in a bag according to the first paragraph.

### BACKGROUND OF THE INVENTION

Today food products are often pre-prepared and sold as so-termed convenient meals. For customer convenience such meals are packed in packages allowing the heating or cooking of the meal contained therein without removing the packaging. When heated up, e.g. in a microwave oven, moisture contained in the food converts into steam. In order to cope with the rise of the internal gas-pressure such a package comprises a valve, which allows the steam to escape from the package without exploding. At the same time the valve controls the internal steam or gas-pressure as an important parameter for cooking the meal. In this context a bag ready to use in a microwave oven is known from WO 2009/130177A1. Such a bag comprises a zipper for re-closure of the bag. The bag including the zipper's flanges sealed to the inside of the wall of the bag is manufactured in a complex manufacturing process, in which a valve is created between the zipper's flanges and the inside wall of the bag. Although the bag performs well, the design of the known bag seems to be inconvenient for a number of applications. Hence its market penetration and acceptance is limited.

Therefore, it is an object of the present invention to provide an improved bag, an improved method of manufacturing such a bag, an improved sealing jaw usable in said method, and a packaged good that is packed in said improved bag.

### SUMMARY OF THE INVENTION

In order to achieve this object a bag is provided, preferably for packaged good, in particular food to be heated in an oven, preferably a microwave oven, wherein the bag comprises a wall made from a foil comprising a sealable inside layer, and a closure-seal that hermetically seals an inside of the bag from an outside of the bag, wherein the closure seal is created by sealing together areas of the inside layer, and a valve located inside the bag and separating a first part of the bag, which first part encloses a volume intended to carry the packaged good, from a second part of the bag, wherein the valve comprises a number of valve-seals that seal together areas of the inside layer, and a number of valve-channels that are located between areas of the inside layer which are sealed together.

Also a method of manufacturing a bag, preferably for packaged good, in particular food to be heated in an oven, preferably a microwave oven, wherein a foil comprising a sealable inside layer is used to make a wall of the bag, achieves said object, wherein said method comprises the steps of creating a closure-seal by sealing together areas of the inside layer, wherein the closure-seal hermetically seals an inside of the bag from an outside of the bag, and creating a number of valve-seals and a number of valve-channels that are located between sealed together areas of the inside layer inside the bag, the valve-seals are created by sealing together areas of the inside layer so that the valve-seals separate a first part of the bag, which first part encloses a volume intended to carry said packaged good, from a second part of the bag.

Also a sealing jaw achieves said object, wherein said sealing jaw comprises a first sealing zone for creating a closure-seal by sealing together areas of the inside layer of a foil used to create a wall of said bag, and a second sealing zone for creating a number of valve-seals by sealing together areas of the inside layer of said foil, wherein the height of the first sealing zone and the height of the second sealing zone are identical.

Also a packaged good, preferably food to be heated up in a microwave oven, that is packed in a bag according to the invention achieves said object.

The invention provides the advantage that the bag that does not comprise a separate zipper used to structure a valve between the zipper's flanges and the inside layer of the bag wall, has a wider applicability.

Advantageously the bag comprises the valve inside the hermetically closed wall directly implemented between parts of the wall of the bag. This allows convenient transport and storage of packaged good, e.g. pre-prepared convenient food that is ready to be heated up without the necessity of a re-closability feature of the bag, while any contact of the packaged good with the outside of the bag is reliably avoided.

Herein "seal together areas of the inside layer" shall either mean:
- indirectly sealed together via a thin sealable layer of a foil placed between the areas of the inside layer to be sealed together, or
- directly sealed together. Both embodiments are basically possible but in the following only the preferred embodiment meaning "directly sealed together" is further explained.

As the valve is created by directly sealing together opposing or in other words confronting or contiguous areas of the inside layer of the wall also its manufacturing process is simplified and more cost efficient and faster when compared to solutions in which a zipper must be sealed with its flanges to the inside layer of the wall of the bag. As the zipper is avoided the sealing can take place at the same plane as the sealing of the closure-seal takes place, which eases the alignment of those parts of the bag that are used to structure the valve. In particular the entire handling of the zipper, which may comprise transportation, placing it at an appropriate location and sealing its flanges in a structured way so that the valve is created, is completely avoided. Because of the more streamlined, cost efficient and faster manufacturing process also the sales price of the bag is positively influenced (reduced), which allows the valve comprising bag to be applied in applications in which the use of a zipper is not accepted because of cost restraints.

Advantageously a sealing jaw, more preferably a pair of such sealing jaws is used to cerate the structure of the valve by sealing together confronting parts of the sealable inside layers of the wall of the bag. The sealing takes place at the desired location of a number of valve-seals, which are located inside the perimeter of the bag at the same plane that is used to create the closure seal.

Because of the location of the valve being hermetically sealed inside of the bag by the closure-seal, the bag can in particular be conveniently used in (cooking) applications in which no re-closure is required. In fact the inventive structure of the bag realizes a non re-closable bag.

As the entire valve function is integrated between confronting parts of the wall that are sealed together in a structured way (structured by the valve seals), also the look and feel appearance of the bag, as well as its operating and / or handling safety, is influenced in an advantageous way. Firstly, the valve is not visible from the outside of the hermetically closed bag. The region that is used to create the valve appears to be only a further sealing area, which extends without any irregularities in thickness, which would be the case if a zipper is used. The area of the bag in which the valve-seals are created appears simply plain and flat and invites the user to grab and carry the bag at the area of the valve. Secondly, once an exhaust area of the valve is opened, the structure of the valve remains intact and cannot be manipulated by a user. Hence any faulty operation by a user, which could be e.g. in case of a zipper any accidental opening of the zipper's engaging element that may lead to a non-function of the valve, is sustainably avoided because the valve-seals are permanent seals. Advantageously the permanently sealed structure of the valve seals also serves other functions like preventing that the product could be spread out of the bag.

In fact the valve that is created by said number of valve-seals and said number of valve channels separates the bag into two parts. A first part encloses the packaged good. Adjacent to the first part is a valve part located that comprises the valve. Adjacent to the valve part is a second part located that seals the exhaust ends of the valve from the outside.

The bag may have the closure-seal around its entire outer periphery in which two confronting wall segments are sealed together to form the tightly sealed bag. In case of a folded foil used to create the wall of the bag, the closure seal may in fact extend only in such areas where the bag must be tightly closed. Such a bag may have a (one or more) further seal (edge-seal) substituting the closure-seal along the folding edge of the foil, but for the sake of simplicity herein such an edge-seal is also termed closing-seal and is to be understood as such a closure-seal.

The bag may also show a dedicated bottom part intended to place the bag in an upright position in which the valve is located on top of the bag in a head area of the bag.

The bag may have any shape or size.

The valve may extend between one part of the closure-seal to another part of the closure-seal. This may mean e.g. from a left part of the closure-seal to a top part of the closure-seal or from a left part of the closure-seal to a right part of the closure-seal or from a left part of the closure-seal to a bottom part of the closure-seal or from a right part of the closure-seal to a bottom part of the closure-seal or from a right part of the closure-seal to a top part of the closure-seal or from a bottom part of the closure-seal to a top part of the closure-seal. The respective extension and / or orientation selected for the valve may be determined by the usage, placement or orientation of the bag during usage (heating / cooking / presenting and so on). Along its global extension or orientation the valve may follow a straight line or a curved or zigzag shaped line.

The number of valve-seals may vary from one to one hundred or even more, which may strongly depend on the size of the bag, the size of the valve or even on the desired heating or cooking conditions or effect to be achieved inside the volume of the bag. Typically the valve-seals will be located adjacent to a part of the closure-seal but spaced by a first valve-channel on its left side and spaced by a second valve-channel on its right side from the closure-seal. Hence, typically the number of valve-channels may be one more than the number of valve-seals. However, also other configurations may be possible in which the two numbers may be equal.

The bag, also sometimes termed pouch, may be a premade bag, which can be applied e.g. on one side open to fill and close it when filled with packaged good. The bag may also be directly made on a filling machine, e.g. a so termed Form-Fill and Seal (FFS) machine. Without any claim to completeness the bag may be shaped in form of a pillow pouch, stick pack and so on.

The dependent claims and the subsequent description disclose particularly advantageous embodiments and features of the invention, whereby features disclosed and discussed in the context of one of the subject matters claimed by an independent claim can also be used to the advantage of the subject matter of another independent claim.

The valve-channels may have various forms, like straight channels with constant width along the channels, meander structures, triangular shapes, curved shapes, and the like. The valve-channels may also have a structure that shows a first end facing the inside of the bag and a second end facing the opposite side of the bag, wherein the second end is wider than the first end. According to a preferred embodiment the valve-channels have a first end that faces the inside of the bag and an opposite second end (exhaust end), wherein the first end is wider than the second end. This structure erases the opening of the valve-channels and helps to avoid and / or reduce the so termed glass plate effect.

In order to operatively use the valve, its exhaust ends (second ends) must be opened to the outside of the bag. Hence, according to a further aspect of the invention the wall of said second part of the bag comprises a first opening zone for opening said volume via the valve-channels to said outside. Advantageously the first opening zone, once opened by a user, allows the escape of steam produced while heating the packaged good. During the heating process, e.g. in a microwave oven, said steam is created from the liquid part of the packaged good and an overpressure compared to the outside of the bag is generated in the volume that contains the packaged good. The number of valve-channels, its shape, structure and size allow to control the pressure inside the volume and maintain controlled steam cooking or heating conditions at a given microwave power and pre-determined duration according to the respective preparation instructions.

Once the food is ready cooked or heated up on the desired temperature, it must be taken out of the bag in order to be served on a plate. Hence, according to a further aspect of the invention the wall of said first part of the bag comprises a second opening zone for directly opening said volume to said outside. Advantageously the second opening zone, once opened by a user, allows bypassing the valve or to completely remove the vale part from the bag in order to directly access the ready prepared meal.

The first opening zone may comprise a first weakening in the wall, preferably in form of a laser pre-cut created by a laser beam, wherein the first weakening is applied on the inside or on the outside of the foil but does not penetrate the entire foil. The first weakening may also be realized by embossing or other methods or any superposition or combination thereof to create a weakening in the wall. Also the number of individual measures may not be limited to only one but may be two, three, four or any other number. The first weakening may e.g. define the circumference of a first flap in the wall of the bag. The first flap may be opened or removed from the wall of the bag. This solution may maintain the global structure and appearance of the bag because only a stripe or plate like opening may be created to open the exhaust ends of the valve to the outside. However, in a preferred embodiment the first weakening extends in form of a first line around the circumference of said second part of the bag, preferably parallel to the valve part. This solution allows the removal of the second part or of parts of it adjacent to the valve part. This solution changes the entire appearance of the bag, because ultimately a part of the bag is removable. Advantageously the removed part of the bag may not any longer hinder the exhaust of the steam from the valve, hence improved cooking conditions may be achieved when compared with the flap based solution. According to a further aspect of the invention the first opening zone comprises in the closure-seal a first tear-initiation area which runs from the first weakening in the wall towards the outside. The tear initiation area may be realized e.g. by a perforation of the closure seal. According to a preferred embodiment the first tear-initiation area is realized by a first tear-notch in a first part of the closure seal adjacent to one end of the first weakening and a second tear-notch in a second part of the closure seal adjacent to another end of the first weakening, said tear-notches open from the first weakening towards the outside. Hence easy tear ignition at a well defined location and controlled separation of the wall into separate pieces is achieved so that the second part of the bag can easily be removed from the valve part.

The second opening zone may comprise a second weakening in the wall, preferably created by a laser beam, wherein the second weakening is applied on the inside or on the outside of the foil but does not penetrate the entire foil. The second weakening may also be realized by embossing or other methods or any superposition or combination thereof to create a weakening in the wall. Also the number of individual measures may not be limited to only one but may be two, three, four or any other number. The second weakening may e.g. define the circumference of a second flap in the wall of the bag in order to get access to the volume where the packaged good is stored. The second flap may be opened or removed from the wall of the bag. This solution may maintain the global structure and appearance of the bag because only a stripe or plate like opening may be created to open the packaged food containing volume to the outside. However, in a preferred embodiment the second weakening extends in form of a second line around the circumference of said second part of the bag, preferably parallel to the valve part. This solution allows the easy removal of the valve part. This solution changes the entire appearance of the bag, because ultimately that part of the bag is removable that comprises the valve. Advantageously the removed valve part no longer hinders the direct access to the packaged good. Hence the packaged good can be removed from the remaining part of the bag through a relatively large opening after the heating or cooking period is finished. According to a further aspect of the invention the second opening zone comprises in the closure-seal a second tear-initiation area which runs from the second weakening in the wall towards the outside. The second tear initiation area may be realized e.g. by a perforation of the closure seal. According to a preferred embodiment the second tear-initiation area is realized by a third tear-notch in a third part of the closure seal adjacent to one end of the second weakening and a fourth tear-notch in a fourth part of the closure seal adjacent to another end of the second weakening, said tear-notches open from the second weakening towards the outside. Hence easy tear ignition at a well defined location and controlled separation of the wall into separate pieces is achieved so that the valve part of the bag can easily be removed from the first part.

The position and / or orientation of features, the number of individual features applied and the type of features applied to realize the first and / or the second opening zone may follow the specificities of the product and/or the process(es) for preparing it (pasteurizing, sterilizing or heating in microwave) or the particularities of the bag's material (foil) used.

The first opening zone together with the second opening zone defines a two-stage opening system for the bag. Herein the first opening stage allows opening the exhaust ends of the valve in order to enable steam cooking or heating of food contained in the volume of the bag and the second opening stage allows opening said volume in order to access the heated or cooked food. In a preferred embodiment the first opening stage is designed to remove (break away) the second part of the bag from the remaining bag comprising the first part of the bag and the valve part and the second opening stage is designed to remove (break away) the valve part from the remaining first part of the bag. Hence the two opening stages are intended to be operated consecutively, the first stage before heating or cooking takes place and the second stage after heating or cooking is finished.

According to a further aspect of the invention the foil may comprise various layers, which are manufactured by using various materials or combinations thereof. Although a monolayer foil would be feasible, according to a preferred embodiment of the invention a multilayer foil is preferred because each layer may have individual functions assigned to it.

Accordingly the inside layer may be realized by e.g. PE, OPP, CPP, or PET. The wall of the bag, in particular the inside layer, should serve two practical constraints. First, the inside layer must be sealable against itself in order to realize the valve and the closure-seal and second the so created seals as well as the wall itself must withstand the expected operation temperature while heating or cooking. In particular the inside layer may not degrade or contaminate the packaged good during the heating process, while the inside layer is in direct contact with the hot food.

One or more middle layer(s) may facilitate barrier functions against oil, moisture, oxygen and so on, and therefore realize a functional ply. Without any claim to completeness materials deployable are e.g. aluminum foil, metalized PET or OPA.

The outside layer may be used to provide a marketable finish of the bag that may show a glossy surface with or without any printings while typically not being sealable. Therefore, without any claim to completeness, materials e.g. PET, PA, OPP, or paper is applicable.

The numerous layers may be assembled to form the foil by various techniques like blow extrusion, hot or cold lamination and so on.

As a particular further advantage the avoidance of a zipper allows the selection of materials, which are not compatible (sealable with) typical zipper material. In typical zipper applications the inside layer must be a PE layer. Such a PE layer limits the thermal applicability of the bag significantly. However, in the present invention PE is also feasible as material for the inside layer for low temperature applications around 50°C. For higher temperatures necessary to cook e.g. rice the wall of the bag may be assembled by PET-SiOx, OPA and CPP layers. The inside layer made of CPP is compatible with food safety compliance (no contamination of the food with polymers during the heating process - see e.g. EU Directive EN 1935/2004: REGULATION (EC) No 1935/2004 OF THE EUROPEAN PARLIAMENT AND OF THE COUNCIL of 27 October 2004 on materials and articles intended to come into contact with food and repealing Directives 80/590/EEC and 89/109/EEC) in the targeted temperature range around 100°C. Similar to this in case of e.g. soup cooking the wall may be assembled by PET and as inside layer again CPP. However, in case of preparation of e.g. popcorn, during which temperatures up to 250°C are possible, PET may be the preferred choice for the wall in order to comply with said EU Directive.

Such a bag may also be used in sterilization applications where relatively high temperatures and pressures are expected. In bags where zippers are used the risk of an undesired opening of a zipper during sterilization can hardly be reduced or avoided. Such sterilization can typically only be performed in an autoclave. According to the invention, the avoidance of the zipper also avoids the risk assigned to the zipper and the limits regarding the selection of the foil material. The only constraint that remains is the selection of the appropriate material for the wall in order to maintain a sealed condition of the bag for the temperature and pressure range expected during the sterilization process. If the existence of a weakening is undesired in sterilization processes, the first and second weakening can be omitted and the parts of the bag can be opened or removed by the aid of a knife or a pair of scissors or the like. Dependent on the rigidity of the wall of the bag also the use of an autoclave may be omitted during sterilization.

Hence the invention provides a bag, which shows a wider range of applications than the bag known from WO 2009/130177A1, which is only suitable for relatively low temperatures. This thermal boundary condition renders the known bag unfeasible for applications at higher temperatures, at which the bag, in particular the seal between the zipper and inside wall of the bag, will be destructed. The invention provides a bag that is applicable for almost all temperatures, in particular also for relatively high temperatures, for which at least at present no zipper material exists that can be sealed with the foil material suitable for such high temperatures.

Advantageously a sealing tool in form of a sealing jaw may be used to manufacture or to create a valve in a bag. The sealing jaw may comprise a first sealing zone for creating a closure-seal by sealing together confronting parts of the inside layer of a foil used to create a wall of said bag and a second sealing zone for creating a number of valve-seals by sealing together confronting parts of the inside layer of said foil, wherein the height of the first sealing zone and the height of the second sealing zone are identical. This eases the creation of the sealing jaw and its use in an automated manufacturing process, where simply two identical sealing jaws of identical design must be pressed together to create the number of valve-seals and the closure-seal in one and the same process step.

In summary the invention provides the advantages that
- it allows the application of special foil materials selected to provide the required heat resistance in order to be suitable for microwave heating / cooking / boiling / steaming (steam boiling) of food and the like, while at the same time the foil material complies to food safety standards (no food contamination with polymers of the foil during the microwave process);
- it allows the easy two-stage opening of the bag in order to grant access to the valve in a first step and in a second step to the heated up or cooked food;
- it allows a simple manufacturing of the valve and the closure-seal preferably in a simultaneous manner with only one pair of (preferably identical) sealing jaws, wherein the respective sealing jaw has sealing zones for both purposes that show the same height.

Other objects and features of the present invention will become apparent from the following detailed descriptions considered in conjunction with the accompanying drawings. It is to be understood, however, that the drawings are designed and the description shall be used solely for the purposes of illustration of the invention and not as a definition of the limits of the invention.

### BRIEF DESCRIPTION OF THE DRAWING

In the drawing like features show identical numerals. The figures schematically show in:
- Fig. 1: a first embodiment of a bag according to the invention.
- Fig. 2: a multilayer foil used to manufacture the bag according to Fig. 1.
- Fig. 3: a first step of a method of manufacturing a bag according to Fig. 1.
- Fig. 4: a filling process following the first step visualized in Fig. 3.
- Fig. 5: a second step of the method of manufacturing said bag.
- Fig. 6: an opening of a first opening stage of the bag according to Fig. 1.
- Fig. 7: an escape of steam through a valve of the bag.
- Fig. 8: an opening of second opening stage of the bag according to Fig. 1.

### DETAILED DESCRIPTION OF EMBODIMENTS

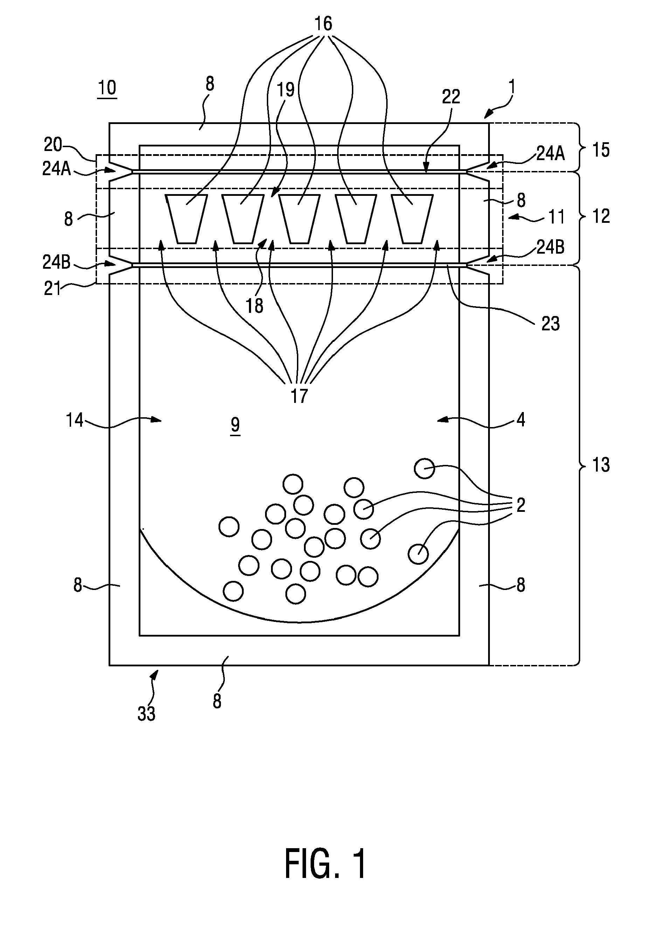

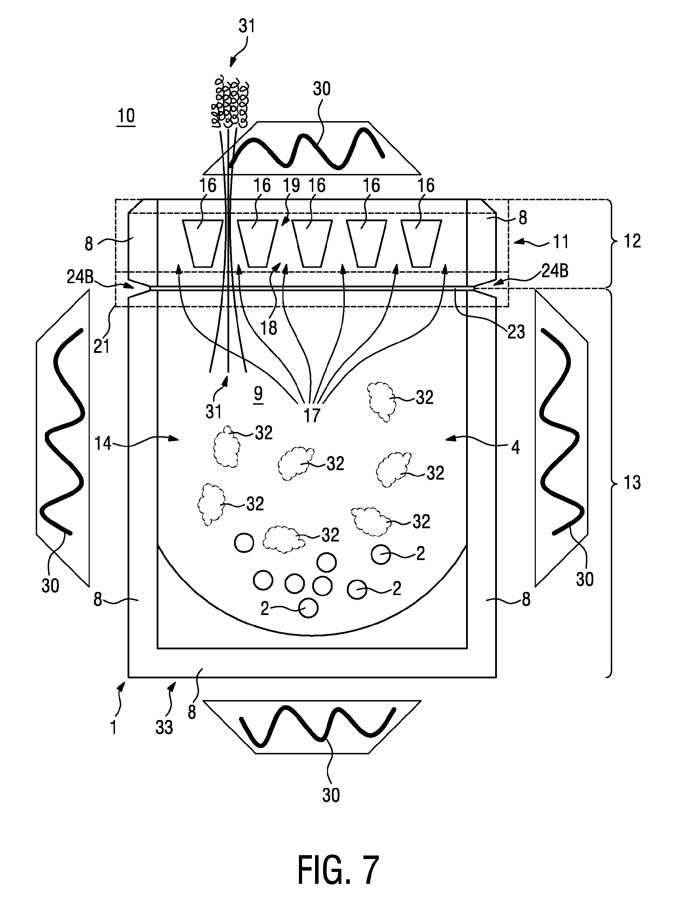

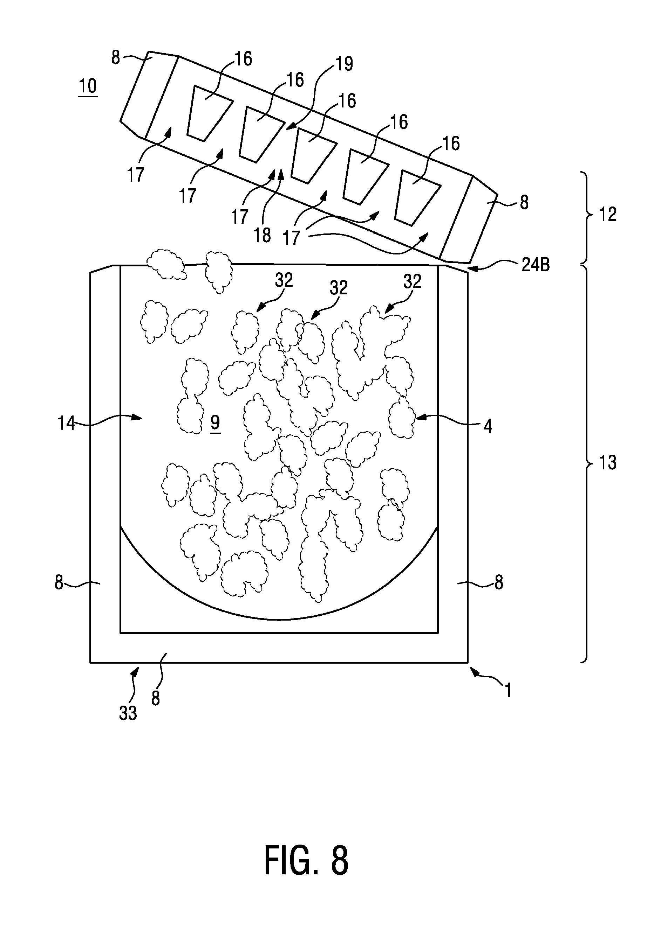

Fig. 1 shows a bag 1 that contains food 2. In the present case the bag 1 contains the ingredient 2 to prepare popcorn 32 (see Fig. 7 and 8) as a packaged good. The basic ingredient is corn (maize), but also salt and oil and the like may be part of the ingredient. The bag 1 is intended to be placed into a microwave oven in order to prepare popcorn 32 by the aid of microwave-generated heat.

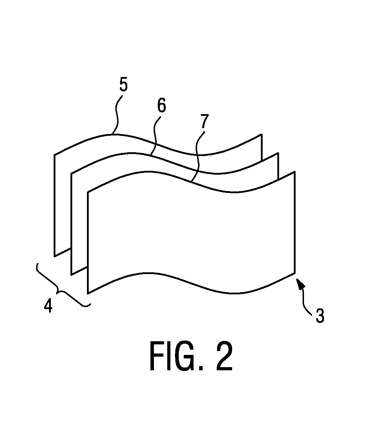

The bag 1 comprises a wall 3 made from a foil 4. The structure of the foil 4 used to manufacture the bag 1 is visualized in Fig. 2. The foil 4 comprises three layers 5, 6, 7. A first layer 5 is a non-sealable outer layer of the wall 3 and is used for marketing purposes. A second layer 6 is a middle layer of the wall 3 and used for barrier purposes. A third layer 7 is a sealable inside layer of the wall 3 and made of PET. PET is selected because it withstands very high temperatures, e.g. in the magnitude of 250°C while food safety compliance is maintained at such high temperatures.

The bag 1 shown in Fig. 1 further comprises a closure-seal 8 that hermetically seals an inside 9 of the bag 1 from an outside 10 of the bag. The closure-seal 8 extends along the entire periphery of the bag 1, which has a rectangular shape. In the area of the closure-seal 8 confronting parts of the inside layer 7 of the foil 4 are sealed together. The basic structure of the bag 1 is created by sealing together the sealable inside layer 7 of two segments of said foil 4 in order to create a front wall portion of the wall 3 and a rear wall portion of the wall 3. In the drawing plane the rear wall portion is hidden behind the front wall portion that faces the viewer's eyes.

The bag 1 further comprises a valve 11 located inside the bag 1. The valve 11 is located in a valve part 12 of the bag 1. The valve 11 separates a first part 13 of the bag 1, which encloses a volume 14 intended to carry packaged good in form of the food 2, from a second part 15 of the bag 1.

The valve 11 comprises a number of five (5) valve-seals 16 that seal together confronting parts of the inside layer 7 of the front and the rear wall portions. The valve 11 further comprises a number of six (6) valve-channels 17 that are located between neighboring parts of sealed together confronting parts of the inside layer 7 of the front and rear wall portion. Each valve channel 17 has a first end 18 and on the other end of the valve channel 17 a second end 19. In order not to overload Fig. 1 with identical numerals only one pair of numerals 18 and 19 is visualized. Each valve channel 17 is shaped in a triangular form - to be precise according to the longitudinal cross section of a truncated cone - and the first end 18 is wider than the second end 19.

The bag 1 further comprises in its wall 3 in said second part 15 a first opening zone 20 for opening said volume 14 via the valve-channels 17 to said outside 10. The bag also comprises in its wall 3 in said first part 13 a second opening zone 21 for directly opening said volume 14 to said outside 10. The first opening zone 20 together with the second opening zone 21 defines a two-stage opening system for the bag 1. The first opening stage 20 is designed to remove (break away) the second part 15 from the remaining parts of the bag 1 comprising the first part 13 and the valve part 12 before heating takes place. The second opening stage 21 is designed to remove (break away) the valve part 12 from the remaining first part 13 after heating is accomplished.

The first opening zone 20 comprises a first laser pre-cut 22, which is formed in the outside layer 5 of the foil 4 only and extends along the front wall portion and the rear wall portion from approximately the center of the left part of the closure seal 8 to approximately the center of the right part of the closure seal 8. Along the valve 11 it runs in parallel to the valve 11 in a distance of approximately 5 mm from the valve 11. On its left and on its right side the laser pre-cut ends in first tear notches 23, which open from the end of the first laser pre-cut 22 towards the outside 10.

The second opening zone 21 comprises a second laser pre-cut 23, which is formed in the outside layer 5 of the foil 4 only and extends along the front wall portion and the rear wall portion from approximately the center of the left part of the closure seal 8 to approximately the center of the right part of the closure seal 8. Along the valve 11 it runs in parallel to the valve 11 in a distance of approximately 5 mm from the valve 11. On its left and on its right side the laser pre-cut ends in second tear notches 24, which open from the ends of the second laser pre-cut 23 towards the outside 10.

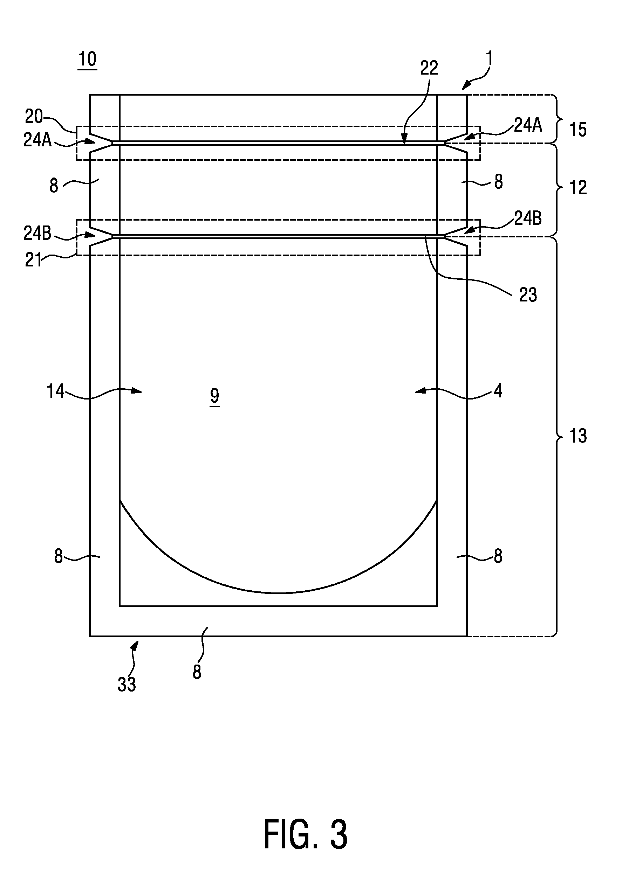

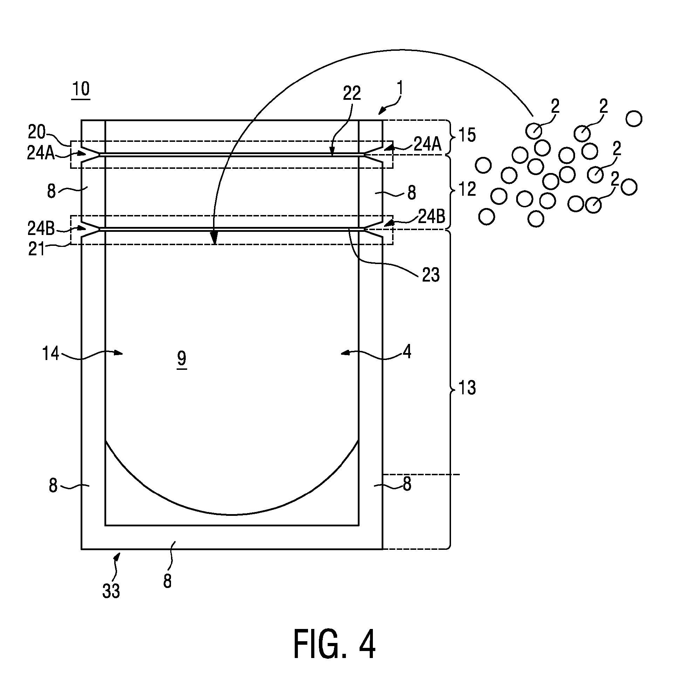

In the following the manufacturing and filling of the bag 1 is discussed with reference to figures 3, 4 and 5. Fig. 1 depicts an unfinished and empty, pre made top-open bag 1. Here the bag only comprises the left, right and bottom parts of the closure seal 8, while the top part of the closure seal 8 is still missing. The depicted pre-made bag 1 is manufactured by sealing together confronting sides of the inside layer 7. The pre-made bag already shows the first and second laser pre-cuts 22 and 23, which are created in a web of the foil upfront to sealing together the front wall portion and the rear wall portion in the closure-seal 8. After the creation of the described parts of the closure-seal 8 the tear notches 23 and 24 are created by punching out respective parts of the closure-seal 8. The so created pre-made bag is delivered from a converter to a filling station (not depicted) of a third party where the ingredient 2, for preparing popcorn 32, is filled into it as depicted in Fig. 4.

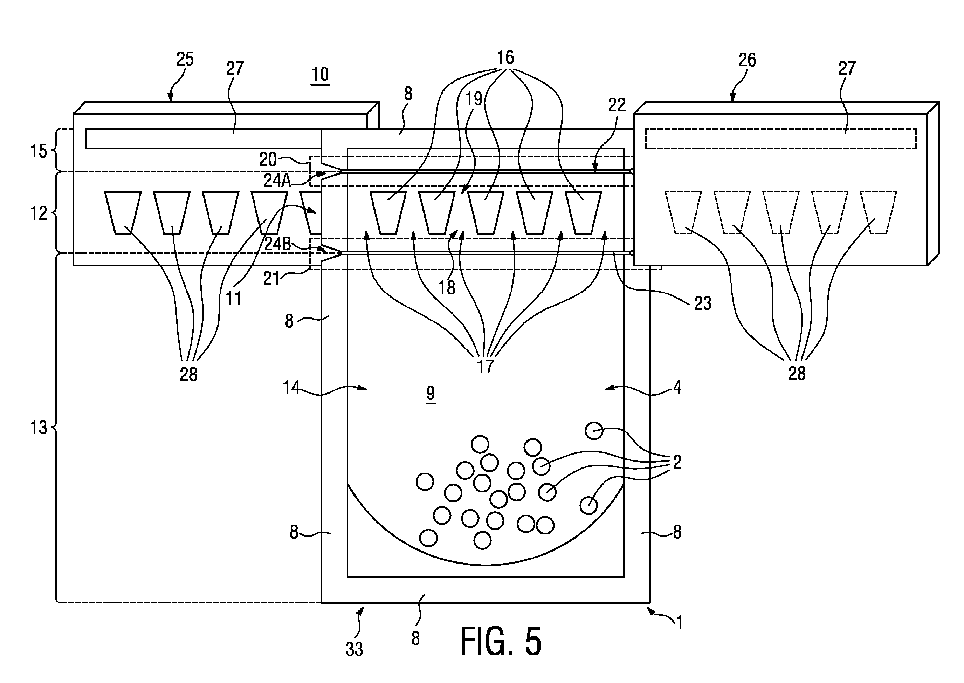

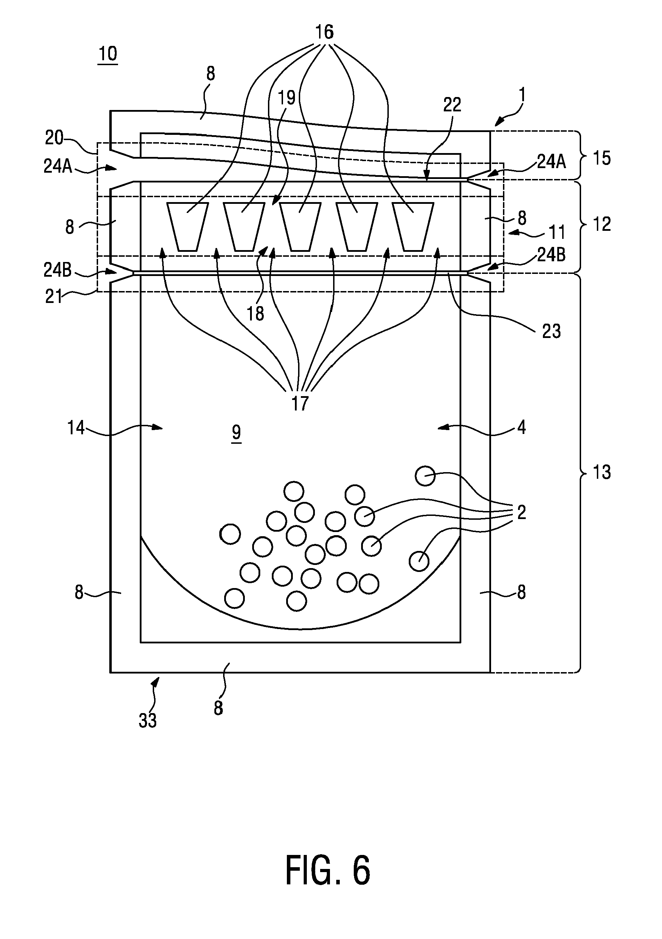

According to the method of manufacturing, in a further method step depicted schematically in Fig. 6, the closure-seal 8 along the top part of the bag 1 is created by sealing together confronting parts of the inside layer 7, wherein the closure-seal 8 now hermetically seals the inside 9 from the outside 10. Further to this, said number of valve-seals 16 and said number of valve-channels 17 are created also by sealing together confronting parts of the inside layer 7. The closure-seal 8 along the top part of the bag 1 is created simultaneously by using a unique pair of sealing jaws 25 and 26 as depicted in Fig. 5. Here a first sealing jaw 25 is pressed against the rear wall portion while a second sealing jaw 26 is pressed against the front wall portion. Both sealing jaws 25 and 26 show a first sealing zone 27 for creating the closure-seal 8 on the top of the bag 1 and a number of five (5) second sealing zones 28 for creating the valve-seals 28. Advantageously the first and the second sealing zone 27 and 28 show an identical height.

In the following the use of the bag 1 from a user's point of view is explained in Figures 6 to 8. In Fig. 6 the opening of the first opening stage is visualized by a halfway opened top of the bag 1. The process step is stated by initiating a rip at the sinistral first tear notch 23, which under a drag force exposed on the second part 15 of the bag 1 propagates along the wall from the left side of the closure-seal 8 to the right side of the closure-seal 8, where the second part 15 of the bag 1 is torn away from the remaining parts 12 and 13 of the bag 1.

The bag 1, now missing its second part 15, is put into a microwave oven 29, where under the influence of microwaves 30 the humidity contained in the ingredient is heated up until steam 31 is generated. The steam 31 escapes via the valve channels 17 from the inside 14 to the outside 10 of the bag 1, while in the volume 14 popcorn 32 is prepared.

At the end of the cooking period, as depicted in Fig. 8, the valve portion 12 is torn off the first part 13 of the bag 1, so that the volume 14 is directly accessible via the opening created at the location of the torn away valve part 12. In other words, the second opening stage is opened after the finalization of the cooking process.

The bag 1 also comprises a bottom part 33 that allows the bag 1 to stand in an upright position so that the volume 14 can be accessed from top-down and the popcorn 32 does not pour out of the bag 1 after the valve part 12 is removed. However, other packaged products may demand other forms of the bottom part 33.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. The word "comprising" does not exclude the presence of elements or steps other than those listed in a claim. The word "a" or "an" preceding an element does not exclude the presence of a plurality of such elements. In the illustration enumerating several means, several of these means may be embodied by one and the same item. The mere fact that certain measures are recited in mutually different dependent claims does not indicate that a combination of these measures cannot be used to advantage.

## Claims

1. A bag (1), preferably for packaged good (2), in particular food, to be heated in an oven, preferably a microwave oven (29), wherein the bag (1) comprises
- a wall (3) made from a foil (4) that comprises a sealable inside layer (7), and
- a closure-seal (8) that hermetically seals an inside (9) of the bag (1) from an outside (10) of the bag (1), wherein the closure seal (8) is created by sealing together areas of the inside layer (7), and
- a valve (11) located inside the bag (1) and separating a first part (13) of the bag (1), which first part (13) encloses a volume (14) intended to carry the packaged good (2), from a second part (15) of the bag (1),
wherein the valve (11) comprises
+ a number of valve-seals (16) that seal together areas of the inside layer (7), and
+ a number of valve-channels (17) that are located between areas of the inside layer (7) which are sealed together.

2. The bag (1) according to claim 1, wherein each valve-channel (17) has a first end (18) that faces the volume (14) of the bag (1) and a second end (19), wherein the first end (18) is wider than the second end (19).

3. The bag (1) according to any of the preceding claims, wherein the wall (1) of said second part (15) of the bag (1) comprises a first opening zone (20) for opening said volume (14) via the valve-channels (17) to said outside (10).

4. The bag (1) according to claim 3, wherein the wall (1) of said first part (13) of the bag (1) comprises a second opening zone (21) for directly opening said volume (14) to said outside (10).

5. The bag (1) according to claim 3 and / or 4, wherein said opening zone (20, 21) comprises a weakening (22, 23) in the wall (3), preferably created by a laser beam.

6. The bag (1) according to claim 5, wherein the weakening (22, 23) extends in form of a line around the circumference of the bag (1), preferably in parallel to the valve (11).

7. The bag (1) according to claim 5, wherein said opening zone (20, 21) comprises in the closure-seal (8) a tear-initiation area (24A, 24B) which runs from the weakening (22, 23) in the wall (1) towards the outside (10).

8. The bag (1) according to claim 7, wherein the tear-initiation area (24A, 24B) is realized by a tear-notch, said tear-notch opens from said weakening (22, 23) towards the outside (10).

9. A method of manufacturing a bag (1), preferably for packaged good (2), in particular food, to be heated in an oven, preferably a microwave oven (29), wherein a foil (1) comprising a sealable inside layer (7) is used to make a wall (3) of the bag (1), wherein said method comprises the steps of:
- creating a closure-seal (8) by sealing together areas of the inside layer (7), wherein the closure-seal (8) hermetically seals an inside (9) of the bag (1) from an outside (10) of the bag (1), and
- creating a number of valve-seals (16) and a number of valve-channels (17) that are located between sealed together areas of the inside layer (7) inside the bag (1), the valve-seals (16) are created by sealing together areas of the inside layer (7) so that the valve-seals (16) separate a first part (13) of the bag (1), which first part (13) encloses a volume (14) intended to carry said packaged good (2), from a second part (15) of the bag (1).

10. The method according to claim 9, wherein the step of creating said closure-seal (8) and creating said number of valve-seals (16) is performed simultaneously, preferably by means of one pair of sealing jaws (25, 26) pressed together.

11. A sealing jaw (25, 26) for creating a valve (11) in a bag (1), wherein the sealing jaw (25, 26) comprises
- a first sealing zone (27) for creating a closure-seal (8) by sealing together areas of the inside layer (7) of a foil (4) used to create a wall (3) of said bag (1), and
- a second sealing zone (28) for creating a number of valve-seals (16) by sealing together areas of the inside layer (7) of said foil (4), wherein the height of the first sealing zone (27) and the height of the second sealing zone (26) are identical.

12. A packaged good (2), preferably food to be heated up in a microwave oven (29), that is packed in a bag (1) according to any of the preceding claims 1 to 8.
